# EUROPÄISCHE PATENTSCHRIFT

(11) **EP 1 241 362 B1**
(45) Veröffentlichungstag und Bekanntmachung des Hinweises auf die Patenterteilung: **21.11.2007**
(21) Anmeldenummer: 02002819.7
(22) Anmeldetag: 08.02.2002
(51) Int. Cl.: B29C 65/00, C09J 5/00, F16B 11/00, B60S 1/08

(54) **Verfahren und Vorrichtung zum Ankleben**
Method and apparatus for glueing
Méthode et appareil pour coller

(30) Priorität: 15.03.2001 DE 10112362
(43) Veröffentlichungstag der Anmeldung: 18.09.2002
(73) Patentinhaber: Bayerische Motoren Werke Aktiengesellschaft, 80809 München (DE)
(72) Erfinder: Bosl, Christian, 94327 Bogen (DE); Weigl, Hans, 84130 Dingolfing (DE); Schmatz, Horst, 94437 Mamming (DE); Johann, Michael, 94437 Mamming (DE)

(56) Entgegenhaltungen:
- WO-A-01/68352
- GB-A- 1 374 570
- US-A- 3 948 719
- US-A- 5 733 410
- US-A- 5 743 991
- PATENT ABSTRACTS OF JAPAN vol. 2000, no. 21, 3. August 2001 (2001-08-03) -& JP 2001 088612 A (CENTRAL GLASS CO LTD), 3. April 2001 (2001-04-03)

## Beschreibung

Die Erfindung bezieht sich auf eine Montagevorrichtung gemäß dem Oberbegriff des ersten Anspruchs.

Es ist allgemein bekannt, beispielsweise in der Serienfertigung von Kraftfahrzeugen, verschiedene Bauteile an Scheiben anzukleben. Hierzu gehört beispielsweise der Innenrückspiegel oder auch ein Regensensor. Beide Bauteile werden im oberen Bereich der Frontscheibe über eine Klebeverbindung befestigt.

Bisher ist man dabei so vorgegangen, dass das anzuklebende Bauteil, das bereits mit einer über Wärme aktivierbaren Klebstoffschicht versehen ist, in eine Haltevorrichtung gelegt wird. Anschließend wird mittels Wärme die Klebstoffschicht aktiviert und dann - nach Entfernen eines Schutzpapiers auf der Klebstoffschicht - das anzuklebende Bauteil geradlinig von unten gegen das aufzunehmende Bauteil gepresst.

Hierbei entsteht dann eine Flächenberührung mit der Gefahr von Lufteinschlüssen. Diese Lufteinschlüsse können auch nicht dadurch verhindert werden, dass die Haltevorrichtung in einem Gehäuse angeordnet ist, das während des Andrückens des anzuklebenden Bauteils die Luft aus dem Klebespalt absaugt.

Obwohl bei einer optischen Sichtkontrolle einer derart durchgeführten Klebung eine vollflächige Klebung ermittelt wird, zeigen anschließende Versuche mit unterschiedlichen Temperaturen und unterschiedlichen Luftfeuchtigkeiten, dass anscheinend vollflächig angeklebte Bauteile sich lösen, weil sich in der Klebstofffläche Luftblasen bilden.

Aus der GB-A 1 374 570 ist es zum Ankleben eines Innenspiegels eines Kraftfahrzeuges an die Innenseite der Frontscheibe bekannt, den Spiegelhalter als Haltewinkel auszuführen, der mit seinem oberen Schenkel an den inneren Rand der Frontscheibe angelegt wird und dann durch eine Drehbewegung um die Scheibenkante angeklebt wird. Durch die Drehbewegung kann die zwischen dem Spiegelhalter und der Frontscheibe befindliche Luft verdrängt werden, so dass keine Lufteinschlüsse in der Klebeschicht vorhanden sind.

Allerdings wird hierbei das Ankleben von Hand durchgeführt und das anzuklebende Bauteil muss eine spezielle Ausgestaltung (Haltewinkel) aufweisen.

Aufgabe der vorliegenden Erfindung ist es, eine automatisch arbeitende Vorrichtung bereitzustellen, mit der Lufteinschlüsse an flächigen Klebstoffflächen vermieden werden können.

Diese Aufgabe wird erfindungsgemäß durch die Merkmale des ersten Anspruchs gelöst.

Das Grundprinzip der Lösung besteht darin, dass das anzuklebende Bauteil nunmehr nicht mehr flächig mit einer geradlinigen Bewegung an das aufzunehmende Bauteil angepresst wird, sondern zuerst mit einer seiner äußeren Kanten das aufzunehmende Bauteil berührt. Dann wird das anzuklebende Bauteil um die erste Berührungslinie über eine Kulissenbahn geschwenkt. Bei dieser Schwenkbewegung wird die zwischen der Klebstoffoberfläche und dem aufzunehmenden Bauteil vorhandene Luftschicht verdrängt. Die Zeit hierfür liefert die Drehbewegung.

Dadurch wird keine Luft mehr in der Klebstoffschicht eingeschlossen, was auch die anschließenden Versuche bei unterschiedlichen Temperaturen und unterschiedlichen Luftfeuchtigkeiten gezeigt haben.

Die Sicherheit gegen Lufteinschlüsse kann noch gesteigert werden, wenn - wie bereits bekannt - während des Anklebens der um die Haltevorrichtung befindliche Luftraum evakuiert wird. Damit wird die durch Drehbewegung verdrängte Luft zusätzlich abgesaugt.

Die Unteransprüche stellen vorteilhafte Ausführungen der Erfindung dar.

Im folgenden wird die Erfindung anhand eines bevorzugten Ausführungsbeispiels näher erläutert. Es stellen dar:
- Figur 1: Eine Seitenansicht der Montagevorrichtung mit einem Querschnitt durch eine Scheibe;
- Figur 2: die Einzelheit X aus Figur 1.

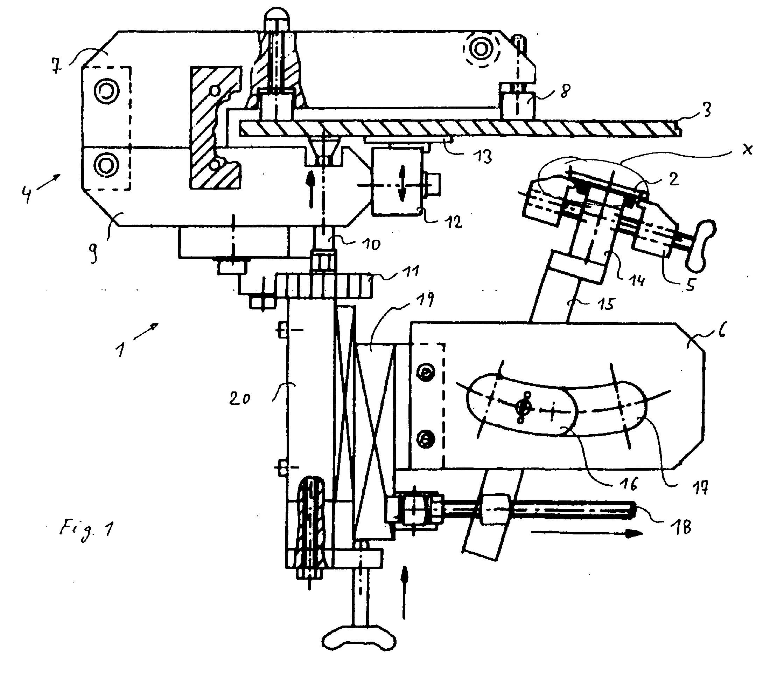

Die Montagevorrichtung 1 nach Figur 1 dient im vorliegenden Beispiel dazu, einen optischen Sensor, einen sogenannten Regensensor 2, an eine Frontscheibe 3 eines Kraftfahrzeuges anzukleben. Selbstverständlich können auch andere Bauteile auf die beschriebene Art und Weise befestigt werden. Dies geschieht in einem Arbeitsgang, bevor die Frontscheibe 3 in ein Kraftfahrzeug eingebaut wird.

Da üblicherweise Einbauten an Kraftfahrzeugscheiben in deren Randbereich angeordnet werden, kann die Montagevorrichtung 1 U-förmig aufgebaut sein und am Scheibenrand positioniert werden.

Die Montagevorrichtung 1 besteht im wesentlichen aus einer Positioniereinrichtung 4, einer Halteeinrichtung 5 sowie aus einem Kulissengehäuse 6.

Die Positioniereinrichtung 4 ist U-förmig aufgebaut. Hierbei weist der äußere Schenkel 7 Stützelemente 8 auf, die sich an der Oberfläche der Scheibe 3 abstützen.

An dem anderen Schenkel 9 ist eine Klemmschraube 10 angeordnet, die über ein Rändelrad 11 gegen die Innenseite der Scheibe 3 gepresst werden kann. Damit kann die Montagevorrichtung 1 an der Scheibe 3 festgelegt werden.

Zum genauen Positionieren der Montagevorrichtung 1 an der Scheibe 3 weist der Schenkel 9 eine Führungseinrichtung 11 auf, die mit einem Bezugselement an der Scheibe 3 zusammenarbeitet. Im vorliegenden Beispiel ist dies ein Fuß 13 zum Aufnehmen des Innenrückspiegels (nicht dargestellt), der in einem vorherigen Arbeitsgang bereits auf die Innenseite der Scheibe 3 angebracht wurde.

Die Haltevorrichtung 5 besteht aus zwei Spannbacken, die den in einer Aufnahme 14 eingelegten Regensensor 2 an einer geeigneten Stelle festhalten. Der Spannvorgang selbst kann von Hand über ein Gewinde nach Art eines Schraubstocks oder aber auch hydraulisch oder elektrisch durchgeführt werden.

Die Aufnahme 14 ist an einem Arm 15 angeordnet, der gelenkig in einem Kulissenstein 16 gelagert ist. Dieser Kulissenstein 16 ist in einer Kulissenführung 17 im Kulissengehäuse 6 verschiebbar gelagert. Die Verschiebebewegung kann über eine Handspindel 18 oder elektrisch oder pneumatisch erfolgen.

Das Kulissengehäuse 6 ist höhenverstellbar über eine Linearführung 19 und einem Halter 20 an der Positioniereinrichtung 4 befestigt.

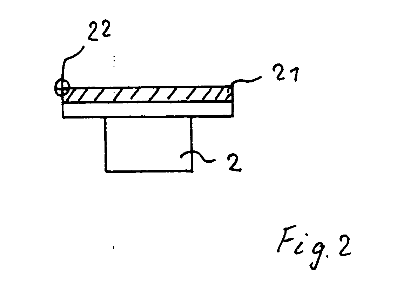

Figur 2 zeigt die Einzelheit X aus Figur 1. Hierbei ist der Sensor 2 vergrößert dargestellt. Somit ist auch die auf dem Sensor 2 vorhandene Klebstoffschicht 21 sichtbar. Die den Klebstoff gegen Verschmutzung schützende Schutzschicht (Papierstreifen) ist bereits entfernt.

Bei dem Regensensor 2 handelt es sich um einen Sensor mit einer im wesentlichen rechteckigen Klebstoffschicht 21. Dementsprechend sieht man in Figur 2 an einer Längskante der Klebstoffschicht 21 den Drehpunkt, der richtigerweise als Drehlinie 22 bezeichnet wird.

Wenn der Regensensor in die Aufnahme 14 - Klebstoffschicht nach außen - eingelegt ist, liegt auf dieser Drehlinie auch der Mittelpunkt der Kulissenbahn 17, die in der Regel ein Teil eines Kreisumfanges ist. Hierbei ist der Beginn der Kulissenbahn 17 so angeordnet, dass nach dem Positionieren der Montageeinrichtung 1 an der Scheibe 3 und einem Hochfahren des Kulissengehäuses 6 über die Linearführung 19 über einen geeigneten Antriebsmotor die Klebstoffschicht 21 die Scheibe 3 an der Drehlinie 22 und zwar ausschließlich an ihr berührt (Fig.1).

Das Ende der Kulissenbahn ist dadurch bestimmt, dass in Abhängigkeit der Größe der Klebstoffschicht 21 ein vollflächiges Ankleben des Sensors 2 gesichert ist.

Das Ankleben 2 geschieht dadurch, dass nach dem Aktivieren der Klebstoffschicht und dem Zustellen der Haltevorrichtung 5 an die Scheibe 3 die Haltevorrichtung aus ihrer Anfangsstellung entlang der Kulissenbahn 17 zu deren Ende hin bewegt wird. Dadurch dreht der Sensor 2 um die Drehlinie 22 zur Scheibe hin, so dass sukzessive die gesamte Klebstofffläche 21 mit der Scheibe in Kontakt gelangt. Dieser ganze Anklebvorgang findet unter Anpressdruck statt.

Nicht dargestellt in Figur 1 ist noch die Möglichkeit, zumindest um die Haltevorrichtung ein zur Scheibe 3 hin offenes Gehäuse vorzusehen. Am oberen Gehäuserand ist zweckmäßigerweise eine umlaufende Dichtung angeordnet. Mit der Höhenverstellung des Kulissengehäuses und damit auch der Haltevorrichtung 5 wird über die umlaufende Dichtung der Bereich der Haltevorrichtung gegenüber der Umgebung abgedichtet. Wird nun innerhalb des Gehäuses ein Unterdruck aufgebaut, so wird damit die Sicherheit erhöht, Lufteinschlüsse in der Klebstoffschicht zu verhindern.

Selbstverständlich kann der ganze Vorgang vollautomatisch ablaufen. Dann wird üblicherweise die Scheibe in eine Aufnahmevorrichtung gelegt und dort positioniert.

Nachdem der Regensensor in die Haltevorrichtung 5 eingelegt wurde, fährt dieses zusammen mit dem Kulissengehäuse zu einer Aufwärmvorrichtung zum Aktivieren der Klebstoffschicht. Anschließend wird die Schutzfolie von der Klebstoffschicht entfernt. Sodann fährt über eine geeignete Vorrichtung die Haltevorrichtung 5 mit dem Kulissengehäuse 6 in Anklebeposition. Pneumatisch oder hydraulisch wird dann das Kulissengehäuse gegen die Scheibe 3 bewegt, so dass - wenn zuvor die Haltevorrichtung in die in Figur 1 gezeigte Stellung bewegt wurde - bei dem Positionieren des Regensensors an der anzuklebenden Stelle dieser wiederum über seine Drehlinie 22 zuerst die Scheibe 3 berührt. Anschließend wird dann wiederum die Haltevorrichtung 5 in der Kulissenführung elektrisch oder pneumatisch in der Kulisse verfahren, wodurch der Regensensor sukzessive an die Scheibe angepresst wird.

## Patentansprüche

1. Montagevorrichtung zum Ankleben eines mit einer Klebstoffschicht versehenen Bauteils an ein anderes Bauteil, welches nach Aktivierung der Klebstoffschicht gegen das andere Bauteil gepresst wird, bestehend aus einer Aufnahmevorrichtung für das anzuklebende Bauteil, einer Haltevorrichtung für das aufzunehmende Bauteil sowie einer Positioniervorrichtung zum Positionieren der Haltevorrichtung,
**dadurch gekennzeichnet, dass** die Haltevorrichtung (5) über eine Kurvenbahn verschwenkbar ist, deren Kurvenzentrum bzw. Drehlinie (22) in einem Punkt auf dem äußeren Rand des anzuklebenden Bauteils (2) liegt, nachdem das anzuklebende Bauteil in einem Teilbereich seines äußeren Randes in Form einer Linien- oder Punktberührung mit dem anderen Bauteil in Kontakt gelangt ist.

2. Montagevorrichtung nach Anspruch 1,
**dadurch gekennzeichnet, dass** die Haltevorrichtung (5) und die Kurvenbahn in einem Gehäuse angeordnet sind, dessen im Bereich der Haltevorrichtung (5) befindliche Öffnung mit einer Dichtlippe versehen ist.

3. Montagevorrichtung nach Anspruch 1 oder 2,
**dadurch gekennzeichnet, dass** die Kurvenbahn ein Segment eines Kreises ist.

4. Montagevorrichtung nach einem der Ansprüche 1 bis 3,
**dadurch gekennzeichnet, dass** die Kurvenbahn eine Kulissenbahn (17) und in einem Kulissengehäuse (6) angeordnet ist, auf der die Haltevorrichtung (5) über einen Führungskörper gehalten ist.

5. Montagevorrichtung nach einem der vorangegangenen Ansprüche,
**dadurch gekennzeichnet, dass** das Kulissengehäuse (6) höhenverstellbar an der Positioniereinrichtung (4) angeordnet ist.

6. Montagevorrichtung nach einem der vorangegangenen Ansprüche,
**dadurch gekennzeichnet, dass** mit der Montagevorrichtung ein Sensor an die Scheibe eines Kraftfahrzeuges angeklebt wird.

## Claims

1. An assembly device for sticking an adhesive-coated component to another component which, after activation of the adhesion layer, is pressed against the first component, the device comprising a device for receiving the component for sticking, a device for holding the received component and a device for positioning the holding device,
**characterised in that** the holding device (5) is pivotable along a curved track, the centre or line of curvature (22) of which lies at a point on the outer edge of the component (2) for sticking, after a part of the outer edge of the said component has been brought into line or point contact with the other component.

2. An assembly device according to claim 1,
**characterised in that** the retaining device (5) and the curved track are disposed in a casing having an opening with a sealing lip in the neighbourhood of the retaining device (5).

3. An assembly device according to claim 1 or claim 2,
**characterised in that** the curved track is a segment of a circle.

4. An assembly device according to any of claims 1 to 3,
**characterised in that** the curved track is a connecting-link guide (17) and disposed in the casing (6) on which the retaining device (5) is held by a guide member.

5. An assembly device according to any of the preceding claims,
**characterised in that** the casing (6) is vertically adjustable on the positioning device (4).

6. An assembly device according to any of the preceding claims,
**characterised in that** a sensor is stuck to a car window by the assembly device.

## Revendications

1. Dispositif de montage pour coller un composant muni d'une couche d'adhésif contre un autre composant, qui est pressé après activation de la couche d'adhésif contre l'autre composant, comprenant un dispositif de réception pour le composant à coller, un dispositif de fixation pour le composant à recevoir et un dispositif de positionnement pour positionner le dispositif de fixation,
**caractérisé en ce que**
le dispositif de fixation (5) bascule suivant un chemin courbe dont le centre de courbure ou ligne de rotation (22) se trouve en un point du bord extérieur du composant (2) à coller, après que le composant à coller soit arrivé en contact avec l'autre composant dans une zone partielle de son bord extérieur en forme de contact linéaire ou ponctuel.

2. Dispositif de montage selon la revendication 1,
**caractérisé en ce que**
le dispositif de fixation (5) et le chemin courbe sont prévus dans un boîtier dont l'ouverture au niveau du dispositif de fixation (5) est munie d'une lèvre d'étanchéité.

3. Dispositif de montage selon l'une quelconque des revendications 1 ou 2,
**caractérisé en ce que**
le chemin courbe est un arc de cercle.

4. Dispositif de montage selon l'une quelconque des revendications 1 à 3,
**caractérisé en ce que**
le chemin courbe est un chemin à coulisse (17) logé dans un boîtier à coulisse (6) qui tient le dispositif de fixation (5) par l'intermédiaire d'un organe de guidage.

5. Dispositif de montage selon l'une quelconque des revendications précédentes,
**caractérisé en ce que**
le boîtier à coulisse (6) est réglable en hauteur sur une installation de positionnement (4).

6. Dispositif de montage selon l'une quelconque des revendications précédentes,
**caractérisé en ce qu'**
il permet de coller un détecteur contre la vitre d'un véhicule automobile.
